# EUROPEAN PATENT SPECIFICATION

(11) **EP 3 419 730 B1**
(45) Date of publication and mention of the grant of the patent: **05.08.2020**
(21) Application number: 17706483.9
(22) Date of filing: 22.02.2017
(51) Int. Cl.: A63H 33/04, B25J 9/08, A63H 29/22

(54) **A SET OF ROBOTIC BUILDING ELEMENTS**
ROBOTISCHER BAUELEMENTSATZ
ENSEMBLE D'ÉLÉMENTS ROBOTISÉS DE CONSTRUCTION

(30) Priority: 24.02.2016 EP 16157134
(43) Date of publication of application: 02.01.2019
(73) Proprietor: Danmarks Tekniske Universitet, 2800 Kgs. Lyngby (DK)
(72) Inventor: CHRISTENSEN, David Johan, 3540 Lynge (DK); PACHECO, Moises, 2860 Søborg (DK)
(74) Representative: Zacco Denmark A/S
(86) International application number: PCT/EP2017/054002
(87) International publication number: WO 2017/144505

(56) References cited:
- EP-A1- 1 273 398
- EP-B1- 1 287 869
- WO-A1-2008/069549
- CN-A- 104 383 698
- KR-B1- 101 470 435
- US-A1- 2013 183 882
- ERIC SCHWEIKARDT ET AL: "Learning about Complexity with Modular Robots", DIGITAL GAMES AND INTELLIGENT TOYS BASED EDUCATION, 2008 SECOND IEEE INTERNATIONAL CONFERENCE ON, IEEE, PISCATAWAY, NJ, USA, 17 November 2008 (2008-11-17), pages 116-123, XP031372491, ISBN: 978-0-7695-3409-1

## Description

### INTRODUCTION/BACKGROUND

Building elements that can be interconnected with other building elements in a set of building elements in accordance with some type of modular system have been known for decades and for a variety of purposes such as for education and play.

Such building elements are often characterised by being extremely intuitive to use and interconnect, by enabling numerous different constructions to be built, and by not requiring tools or special skills. Often systems of building elements addresses children say from age 6 and up.

In recent years robotic toys and educational systems have become increasingly popular and there is a demand to construct robots or other constructions e.g. vehicles which resembles professional robots and other constructions as far as possible - and which may serve as prototypes to solve real automatization problems.

In connection therewith it is discovered that known building elements and their interconnection means are not sufficient to meet the demand.

### RELATED PRIOR ART

WO 2011/011084-A1 discloses a module for building robots having a connector rotated by a gear motor having a drive shaft. The connector comprises a number of magnets for engagement with a connector on another module as well as a flange/slot structure suitable for transferring the momentum from the drive shaft to an attached module.

EP 1287869-B1 discloses a module in a robotic toy modular system for building robots comprising a rotatable connection plate rotated by a servomotor. The connection plate has flanges and slots suitable for transferring the momentum from the drive shaft to an attached module.

WO 2013/066901-A1 discloses a module in modular kinematic construction kit for building robots having a connector rotated by a gear motor having a drive shaft. The connector comprises a number of magnets for engagement with a connector on another module.

US 2014/227939-A discloses a modular toy block comprising a connector with a sawtooth structure having an inner part and an outer part. The inner part and the outer part may be rotated in fine angular steps determined by the sawtooth structure with respect to each other. A magnet is used for releaseably attaching one module to another.

However, these and other types of robotic toy or educational building systems suffer from the common problem that interconnections are not strong enough to enable building of a robot that can spread out its limbs to reach out to a range as is known for instance from industrial or "real-world" robots.

Further, these and other types of building elements have a configuration that allows a robot build from them to carry barely their own weight when trying to reach out to some range.

### SUMMARY

The present invention provides a set of building elements according to claim 1.

Thereby two first building elements can be magnetically interconnected at their respective first connectors. When the connectors of the respective two first building elements are brought together, the rotatably arranged diagonally magnetized magnets rotate by mutual magnetic repulsive force such that at least one of them rotate until they face each other in an angular position whereat magnetic attractive forces keeps the two first building elements connected. Should the respective rotatably arranged diagonally magnetized magnets already be in the right (magnetically attacting) angular position with respect to each other, the magnets will not rotate. Thus, in case the connectors allow interconnection at two or more mutual angles about an axis at right angles to the abutment face, the rotatably arranged diagonally magnetized magnets adjust themselves by rotation to keep the first building elements connected by magnetic attractive force. In this way it is possible to magnetically interconnect two connectors despite of a relatively small diameter of the connector.

In some embodiments a first building element, as defined above, may connect with a second building element, defined by a metal disc arranged behind the abutment face instead of a diagonally magnetized magnet. Then, when the connectors of the respective first building element and the second building element are brought together, the diagonally magnetized magnet of the first building element need not rotate. In some embodiments the second building element has a larger diameter than the first building element. The second building element may have magnets arranged at other positions than at the centre portion, but have a metal disc positioned at the centre position to connect magnetically with the first building elements. This greatly improves flexibility of a building system, such as a toy building system.

This set of building elements comprises connectors that enables rotation of the elements with respect to each other, while the geometry of the connectors gives a strong coupling between the building elements, which can be made longer to resemble a robot that has manoeuvrability and reach as is known for instance from industrial or "real-world" robots.

In some embodiments, the bearing is a ball bearing. In other embodiments the bearing is a plain bearing. The plain bearing may be a sleeve bearing.

In particular the connector effectively locks two interconnected building elements together in such a way that even if a significant bending force is applied between two connected building elements, the building elements will remain connected and with only limited deflection. This is a major advantage since it makes the robots much less fragile. Yet, the connector remains intuitive to connect and disconnect.

Since the male and female engagement members extend radially from the centre portion, it is possible to interconnect connectors with different diameters. Thereby, building elements with a larger diameter may form a core of a construction, while building elements with a smaller diameter may form limbs or more remote elements of a construction to save one or both of weight and cost.

The magnets synergistically work with the engagement members since they can withstand a substantial torque and since once connected, friction between the male engagement member and the female engagement member keeps the interconnected connectors securely locked.

In some aspects the male engagement member and the female engagement member have a tapered and matching shape. Thereby, once taken slightly apart by a user, both magnetic force and frictional coupling will decrease quickly with distance. While the connectors are interconnected both magnetic coupling and frictional coupling will keep the connectors securely interconnected and able to withstand significant bending forces.

In some embodiments the body member is tubular or tubular with one or more branches terminated by a connector. With a tubular shape it is possible to produce building elements that can reach out over a significant distance as enabled by the connector. Further, tubular body members can be manufactured at a reasonable cost level even at lengths of about 20 cm and more. The diameter of the body members may be in the range of about 3 cm to 12 cm or more.

In some embodiments at least some of the end-portions of said body member have a round cross-section. The round cross-section may be substantially circular.

In some embodiments at least one of the body members is configured to taper off towards at least one of the end portions. Thereby an improved cost-to-strength ratio over that of same-diameter body-members is achievable.

In some embodiments the female engagement member is configured as a recess and the male engagement member is configured as a protrusion with respective side walls extending in a radial direction from the centre portion; and wherein a sidewall of the recess abuts a sidewall of the protrusion such that a plane sidewall is formed from a bottom portion of the recess to a top portion of the protrusion. The sidewall serves a dual purpose: namely that of guiding connectors together for interconnection and that of reinforcing the frictional coupling once connected.

In some embodiments the set of building elements comprises multiple pairs of a radially extending male engagement member and a radially extending female engagement member. In some aspects the connector is configured with two, three or four pairs of engagement members.

In some embodiments the multiple pairs of a radially extending male engagement member and a radially extending female engagement member are arranged at 90 degrees angles with respect to each other. The engagement members are arranged at 90 degrees angles with respect to each other with respect to an axis that is normal, i.e. at right angles, to the abutment face.

In some embodiments the set of building elements comprises multiple pairs of magnets sitting behind the abutment face, with their polarity arranged opposite to one another, at substantially the same radial distance to the centre portion such that magnetic polarity alternates with a clockwise or anticlockwise rotation of the connector. In this way all such arranged magnets of two interconnected connectors will engage with opposite polarity for best possible interconnection force.

In some embodiments the diagonally magnetized magnet is substantially cylindrical and rotatably arranged. The diagonally magnetized magnet is rotatable about its axial axis. The north pole of the diagonally magnetized magnet is located at an angular range of approximately 180° about the axial axis and the south pole is located at an angular range of the opposing 180° .

In some embodiments the diagonally magnetized magnet is accommodated in a substantially cylindrical compartment, a skirt or a bore. A diameter of diagonally magnetized magnet and a diameter of the substantially cylindrical compartment, skirt or bore may have a clearance with respect to each other such that the diagonally magnetized magnet is free to rotate or can rotate at least when exposed to a magnetic force caused by a magnet of similar strength as itself. The diagonally magnetized magnet may be shaped as a substantially cylindrical wafer or a cylinder. The diagonally magnetized magnet may have another shape.

In some embodiments the set of tubular building elements comprises one or more second building elements with a housing which is selected from a group of straight, bend, L-shaped, and T-shaped bodies with one or more end-portions; wherein the building elements are configured with at least one second connector; wherein the second connector comprise: an abutment face with a centre portion; a metal disc arranged behind the abutment face; and a pair of a female engagement member extending radially from the centre portion and a male engagement member extending from the centre portion; wherein a depth of the female engagement member and a height of the corresponding male engagement member is greater than a width (Wm) of the male engagement member or greater than a width of the female engagement member. In this way it is possible to magnetically interconnect two connectors despite of a relatively small diameter of the connector. Also it is possible to connect a connector with both a similar-sized connector and a smaller-sized connector.

In some embodiments the drive unit is coupled to the connector via a coupling. The coupling may be configured to withstand misalignments between shaft and drive unit, such that the drive unit last longer.

In some embodiments the set of building elements comprises a wireless communications circuit operative to generate the control signal to the drive unit. The wireless communications circuit may be a circuit for communicating in accordance with the Bluetooth standard or a Wi-Fi standard or another wireless communications standard e.g. at a frequency about 2.4 GHz.

### BRIEF DESCRIPTION OF THE FIGURES

A more detailed description follows below with reference to the drawing, in which:
fig. 1 shows a cross-sectional longitudinal view of a first building element;
fig. 2 shows an end-view of a connector;
fig. 3 shows an exploded view of the first building element;
fig. 4 shows a perspective bottom-view of a connector;
fig. 5a and fig. 5b show a perspective view of a connector;
fig. 6 shows a perspective top-view of a connector, a side-view, a top-view and a bottom-view;
fig. 7 shows a top-view of a second building element;
fig. 8 shows a cross-sectional view of the second building element;
fig. 9 shows a set of building elements; and
fig. 10 shows a robotic construction made from building elements.

### DETAILED DESCRIPTION

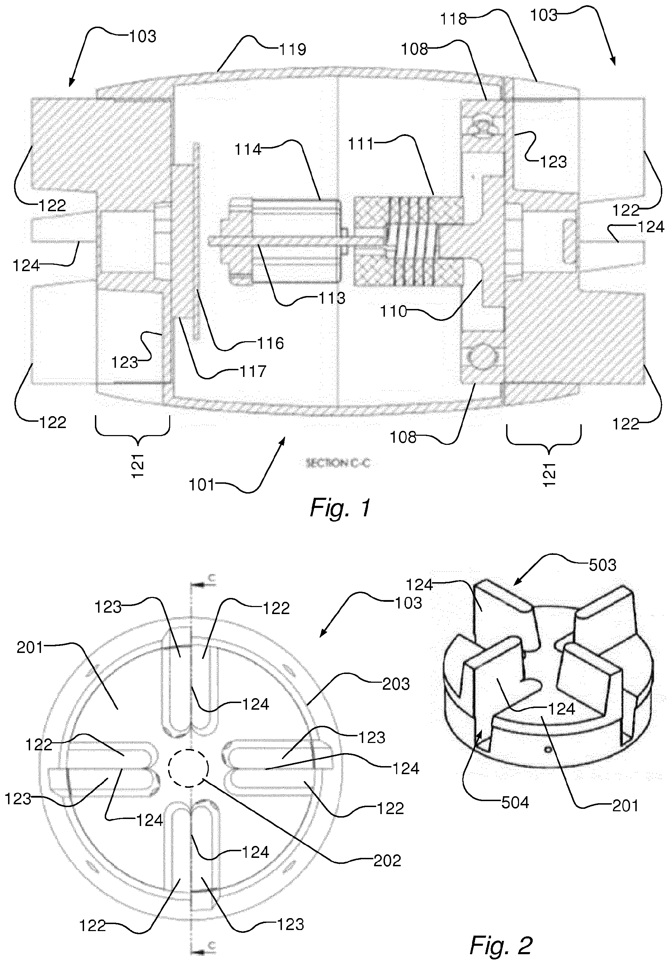

Fig. 1 shows a cross-sectional longitudinal view of a first building element. The first building element 101 comprises a body member 119 with a tubular shape which extends between two end-portions, both designated 121. The body member 119 tapered off towards its end-portions 121 such that its diameter at both ends is smaller than its diameter halfway between the end-portions 121.

A connector, generally designated 103, is accommodated at the end-portions 121 of the body member 119. A part of the connector 103 is accommodated as a plug into the body member 119. The connector 103 has a cross-section that matches the end-portion of the body member.

A drive unit 114, e.g. an electrical motor such as a DC motor, servo motor or stepper motor is accommodated in the body member 119 to turn the connector 103 or at least engagement members thereof relative to the body member 119. The drive unit 114 may comprise a gear e.g. to increase the amount of torque for turning the connector 103.

The drive unit 114 is coupled to the connector 103 via a coupling 111 and a drive shaft 110 with a flange for fixing the drive shaft to the connector 103.

The coupling 111 may be configured to accept misalignments between the drive shaft 110 and the drive unit 114 such that the drive unit 114 is released from strains caused by misalignments, such as those caused by production tolerances.

The drive unit 114 is fixated to a cross-mounted board 113 fixated to the body member 119. The body member 119 may comprise one or more slots (not shown) to accept the board.

The drive unit 114 is powered from an energy storage unit 117, such as an electrical battery, coupled to supply operating power the drive unit. The drive unit 114 is coupled to receive operating power from the energy storage unit 117 via an electrical circuit on a printed circuit board, PCB 116. The electrical circuit may connect to a computer (not shown) via a wired or wireless connection as it is known in the art. The electrical circuit 116 may comprise a programmable controller.

Fig. 2 shows an end-view and a perspective view of the connector. The connector 103 has an abutment face 201, with a rim 203. The abutment face 201 may be at right angles with respect to a longitudinal axis of the building element. With respect to the perspective view, one or more male engagement members 503 extends outwards from the abutment face 201 and one or more female engagement members 504 extends inwards through the abutment face 201.

The female engagement member 504 is configured as a recess and the male engagement member 503 is configured as a protrusion with respective side walls 124 extending in a radial direction from a centre portion 202; and a sidewall 124 of the recess abuts a sidewall of the protrusion such that a plane sidewall 124 is formed from a bottom portion 123 of the recess to a top portion 122 of the protrusion.

It can be seen that the centre portion 202 has a face that lies in the same plane as the abutment face and that the face of the centre portion forms a portion of the abutment face. The engagement members extend radially from the periphery of the centre portion. The centre portion may have a diameter which is in the range of 20% to 60% e.g. about 30% of the diameter of the connector 103 as indicated by the rim 203.

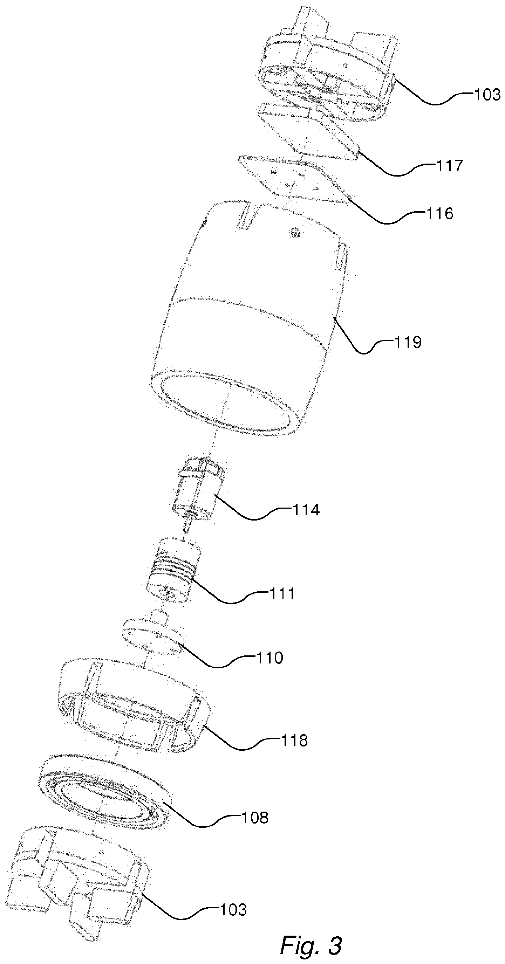

Fig. 3 shows an exploded view of the first building element. A rotating shell 118 is freely rotatable with the connector 103 and may be turned manually independently of the connector or it may be fixed to the connector 103 to turn with it. The shown elements such as the body member 119 are mentioned above.

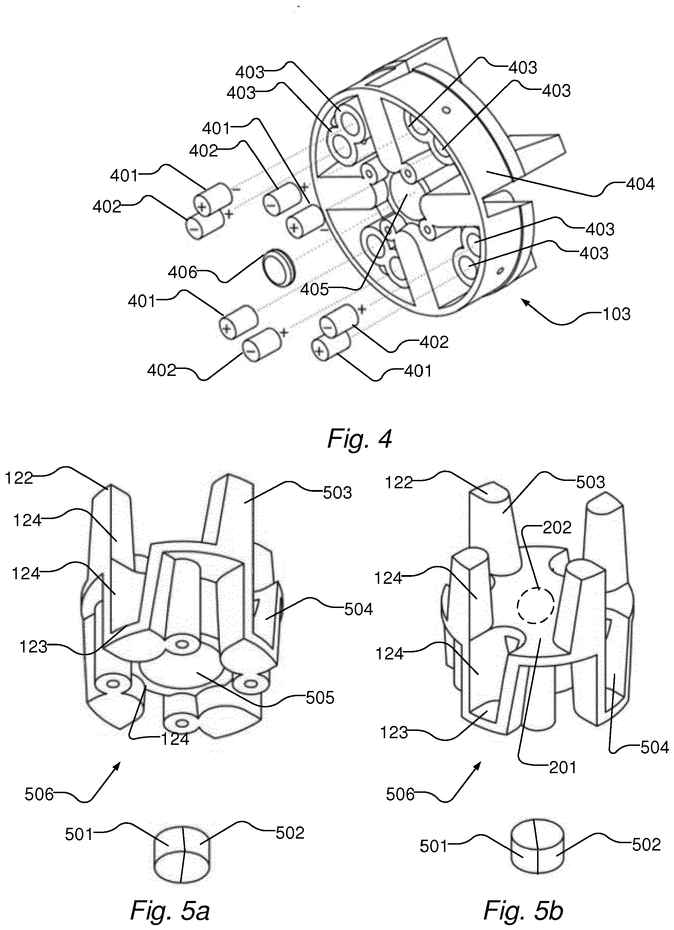

Fig. 4 shows a perspective bottom-view of a connector. In this view of the connector 103 it can be seen that the connector 103 comprises an inwardly extending connector skirt 404 that extends from the periphery of the connector or the rim 203 of the abutment face 201. The connector skirt has a length such that the skirt covers the female engagement member 504.

Enclosed by the connector skirt 404 are four pair of magnet skirts 403 each configured with a bore to accommodate rod magnets 401 and 402. A set of rod magnets 401 is arranged with their positive polarity to face inwards, away from the abutment face 201. Between the rod magnets 401 and alternately therewith are arranged another set of rod magnets 402 with their positive polarity to face outwards, out through the abutment face 201. Thus, along a circle, arranged concentrically with the connector skirt 404, and with its periphery going through the rod magnets 401 and 402 the magnetic polarity alternates.

In some embodiments of the connector 103 a disc 406 of magnetisable material is arranged at a centre portion of the connector 103 e.g. in a centre skirt 405, which thereby centres the disc and accommodates it.

Fig. 5a and fig. 5b show a perspective view of a connector. The depicted connector 506 may have a smaller diameter than the connector 103 shown in the previous figures. However, the connector 506 is compatible with the connector 103 in the sense that the connector 103 may connect with the connector 506.

The connector 506 also has female engagement members 503 and male engagement members 504. The male engagement members 503 of the connector 506 also extend radially from a centre portion 202. Likewise, the female engagement members 504 of the connector 506 also extend radially from the centre portion 202. Both the female engagement members and the male engagement members of the connector 506 has a radial distance to the centre portion which is the same as the radial distance at which the female engagement members 504 and the male engagement members 503 of the connector 103. It should be noted that the term 'same' in connection with the radial distance means that they are substantially the same and that a clearance is built in to allow a good trade-off between a rattle-free connection and not too much friction.

A pair of magnets 501 and 502 is arranged as a centre piece in a centre skirt 505. The pair of magnets connects with the disc 406 of the connector 103 or another pair of magnets of a similar connector 506. The pair of magnets may be rotatable in the skirt 505 to allow them to connect when two connectors are pressed together. The pair of magnets may be embodied as a single diagonally magnetized magnet e.g. such as those made available at www.supermagnete.de with a diameter of e.g. 10 mm and a height of e.g. 5 mm. The magnet or magnets may be of the neodymium type.

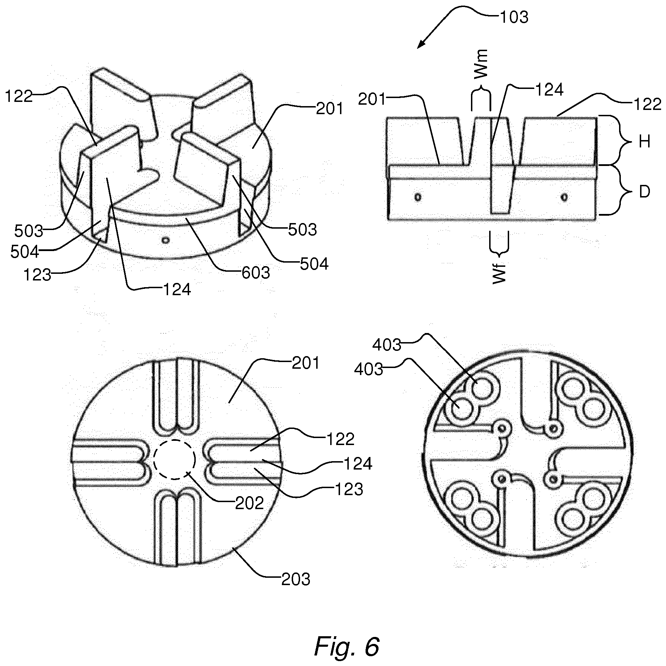

Fig. 6 shows a perspective view of a connector, a side-view, a top-view and a bottom-view. From the perspective view it can be seen that the female engagement member 504 is configured as a recess and the male engagement member 503 is configured as a protrusion with respective side walls extending in a radial direction from the centre portion, wherein a sidewall 124 of the recess abuts a sidewall of the protrusion such that a plane sidewall 124 is formed from a bottom portion 123 of the recess to a top portion 122 of the protrusion. The plane sidewall 124 makes it more intuitive to connect two connectors. The connectors may simply be held against each other at a random angle, but such that the male engagement members touches the abutment face, and then turned while pressed together until engagement is achieved. The magnets may then hold the connectors securely together.

With respect to the side-view, a width, Wf, of the female engagement member 504 is shown and a width, Wm, of the male engagement member 503 is shown. A height, H, of the male engagement member and a depth, D, of the female engagement member is also shown.

In some embodiments the height or depth of the engagement members is greater than the width of the engagement members, such as greater by a factor in the range of 1.1 times to 5 times, e.g. a height and depth that are about 1.2 times greater than the width or e.g. about 2.5 times greater..

The width, Wf, may be measured at the bottom portion 123 or at the level of the abutment face. Likewise, width, Wm, may be measured at the top portion 122 or at the level of the abutment face.

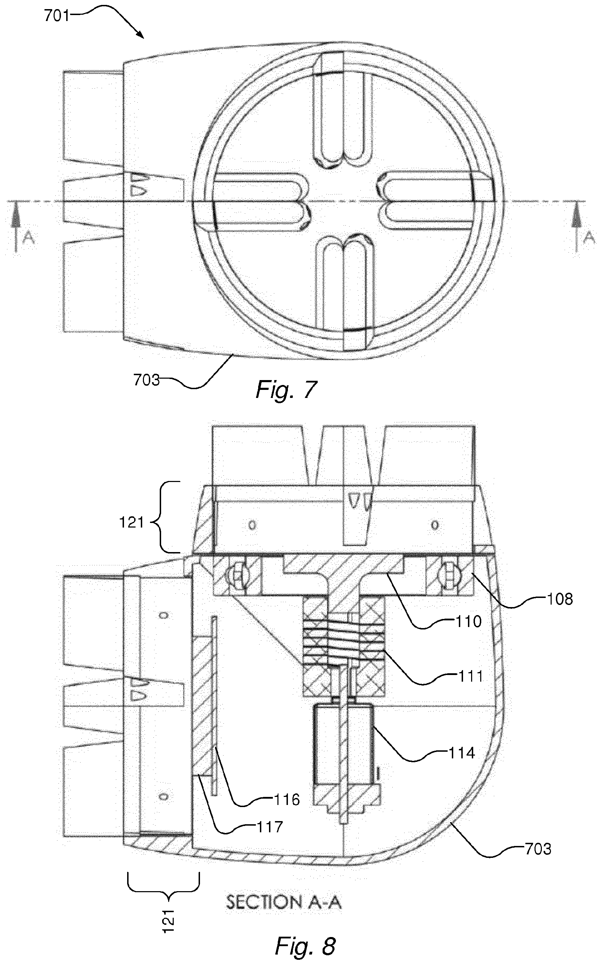

Fig. 7 shows a top-view of a second building element. The second building element 701 has a bend shape.

Fig. 8 shows a cross-sectional view of the second building element.

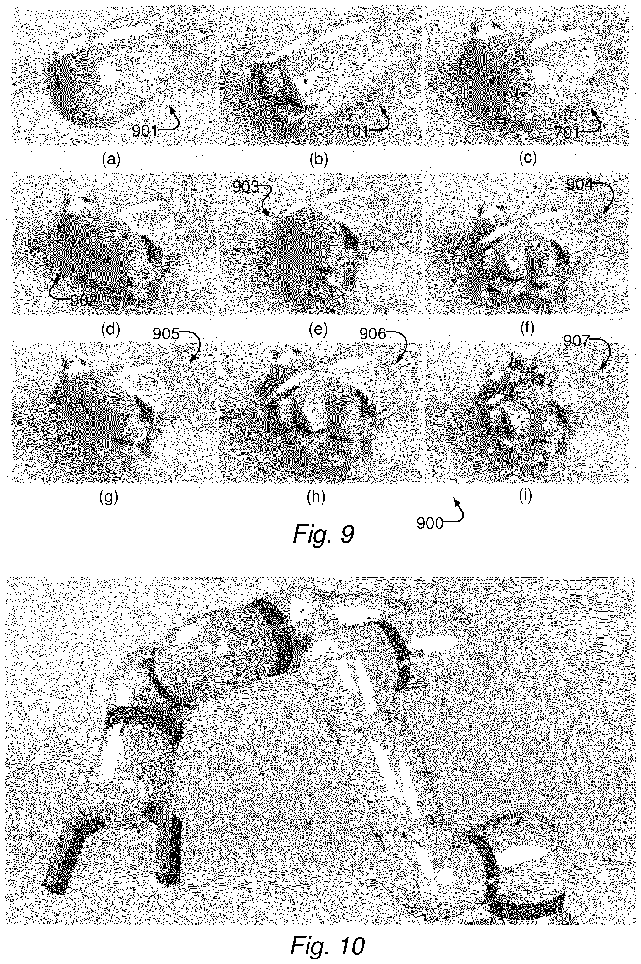

Fig. 9 shows a set of building elements. The set of building elements comprises one or more of building elements 901, 101, 701, 902, 903, 904, 905, 906, 907. All of the shown building elements have a generally tubular shape or a tubular shape with one or more branches terminated by a connector 103.

Building elements 901 and 101 have a body member which has straight shape. One end of the building element 901 is terminated by a connector, whereas both ends of building element 101 are terminated by a connector.

Building element 701 has a body member with a bend shape; both ends of building element 701 are terminated by a connector.

Building element 902 has a body member with a T-shape; all three ends of building element 902 are terminated by a connector.

Fig. 10 shows a robotic construction made from building elements. Due to the configuration of the connector the robotic construction may have a fairly long reach without falling apart and without deflecting significantly.

The invention is limited by the claims.

## Claims

1. A set of building elements (900), comprising:
a first building element (101;701;901..907) with a housing (119) which is selected from a group of straight, bend, L-shaped, and T-shaped bodies with one or more end-portions (121); wherein the first building element is configured with at least one first connector (506) configured as a plug integrated with or installed in at least some of the end-portions (121);
wherein the first connector (506) comprises:
an abutment face (201) with a centre portion (202);
a diagonally magnetized magnet (501,502) rotatably arranged behind the abutment face (201) or a first pair of magnets (501,502;401,402) sitting behind the abutment face (201) with their polarity arranged opposite to one another; and
a pair of a female engagement members (504) extending radially from the centre portion (202) and a male engagement member (503) extending from the centre portion (202); wherein a depth (D) of the female engagement member and a height (H) of the corresponding male engagement member is greater than a width (Wm) of the male engagement member or greater than a width (Wf) of the female engagement member;
wherein the female engagement member (504) is configured as a recess and the male engagement member (503) is configured as a protrusion with respective side walls extending in a radial direction from the centre portion (202); and wherein a sidewall (124) of the recess abuts a sidewall of the protrusion such that a plane sidewall (124) is formed from a bottom portion (123) of the recess to a top portion (122) of the protrusion;
wherein at least a first building element among the building elements (101;701) comprises at least a first one of the connectors (103); wherein the at least first one of the connectors (103) is rotatable mounted in a bearing (108) fixed to the first building element;
a drive unit (114) coupled to turn the first one of connectors (103) in response to a control signal; and
an energy storage unit (117) coupled to supply operating power the drive unit.

2. A set of building elements (900) according to claim 1, wherein the body member (119) is tubular or tubular with one or more branches terminated by a connector (103).

3. A set of building elements (900) according to claim 1 or 2, wherein at least some of the end-portions (121) of said body member (119) have a round cross-section.

4. A set of building elements (900) according to any of claims 1-3, wherein at least one of the body members is configured to taper off towards at least one of the end portions (121).

5. A set of building elements (900) according to any of claims 1-4, wherein the male engagement member and the female engagement member have a tapered and matching shape.

6. A set of building elements (900) according to any of claims 1-5, comprising multiple pairs of a radially extending male engagement member (503) and a radially extending female engagement member (504).

7. A set of building elements (900) according to claim 6, wherein the multiple pairs of a radially extending male engagement member (503) and a radially extending female engagement member (504) are arranged at 90 degrees angles with respect to each other.

8. A set of building elements (900) according to any of claims 1-7, comprising multiple pairs of magnets (401;402) sitting behind the abutment face (201), with their polarity arranged opposite to one another, at substantially the same radial distance to the centre portion (202) such that magnetic polarity alternates with a clockwise or anticlockwise rotation of the connector (103).

9. A set of building elements (900) according to any of claims 1-8, wherein the diagonally magnetized magnet is substantially cylindrical.

10. A set of building elements (900) according to claim 9, wherein the diagonally magnetized magnet (501, 502) is accommodated in a substantially cylindrical compartment, a skirt or a bore.

11. A set building elements (900) according to any of claims 1-10, comprising:
one or more second building elements (101;701;901..907) with a housing (119) which is selected from a group of straight, bend, L-shaped, and T-shaped bodies with one or more end-portions (121); wherein the building elements are configured with at least one second connector (103);
wherein the second connector (103) comprise:
an abutment face (201) with a centre portion (202);
a metal disc (406) arranged behind the abutment face (201); and
a pair of a female engagement member (504) extending radially from the centre portion (202) and a male engagement member (503) extending from the centre portion (202); wherein a depth (D) of the female engagement member and a height (H) of the corresponding male engagement member is greater than a width (Wm) of the male engagement member or greater than a width (Wf) of the female engagement member.

12. A set of building elements (900) according to any of claims 1-11, wherein the drive unit (114) is coupled to the connector via a coupling (111).

13. A set of tubular building elements (900) according to any of claims 1-12, comprising a wireless communications circuit operative to generate the control signal to the drive unit (114).

## Patentansprüche

1. Satz von Bauelementen (900), umfassend:
ein erstes Bauelement (101;701;901..907) mit einem Gehäuse (119), das aus einer Gruppe von geraden, gebogenen, L-förmigen und T-förmigen Körpern mit einem oder mehreren Endabschnitten (121) ausgewählt ist; wobei das erste Bauelement mit mindestens einem ersten Verbinder (506) gebildet ist, der als ein Stecker ausgebildet ist, der mit mindestens einigen der Endabschnitte (121) integriert ist oder in diesen installiert ist;
wobei der erste Konnektor (506) umfasst:
eine Anlagefläche (201) mit einem mittleren Bereich (202);
einen diagonal magnetisierten Magneten (501,502), der hinter der Anlagefläche (201) drehbar angeordnet ist, oder ein erstes Paar von Magneten (501,502;401,402) die mit ihrer zueinander entgegengesetzt angeordneter Polarität hinter der Anlagefläche (201) sitzen; und
ein Paar von einem weiblichen Eingriffselement (504), das sich radial von dem mittleren Bereich (202) erstreckt, und einem männlichen Eingriffselement (503), das sich von dem mittleren Bereich (202) erstreckt; wobei eine Tiefe (D) des weiblichen Eingriffselements und eine Höhe (H) des entsprechenden männlichen Eingriffselements größer als eine Breite (Wm) des männlichen Eingriffselements oder größer als eine Breite (Wf) des weiblichen Eingriffselements ist;
wobei das weibliche Eingriffselement (504) als eine Aussparung gebildet ist, und das männliche Eingriffselement (503) als ein Vorsprung mit jeweiligen in einer Radialrichtung von dem mittleren Bereich (202) sich erstreckenden Seitenwänden gebildet ist; und wobei eine Seitenwand (124) der Aussparung an einer Seitenwand des Vorsprungs derart anliegt, dass eine ebene Seitenwand (124) von einem unteren Abschnitt (123) der Aussparung bis zu einem oberen Abschnitt (122) des Vorsprungs gebildet ist;
wobei mindestens ein erstes Bauelement unter den Bauelementen (101;701) mindestens einen ersten der Konnektoren (103) umfasst; wobei der mindestens eine erste der Konnektoren (103) in einem an dem ersten Bauelement befestigten Lager (108) drehbar montiert ist;
eine Antriebseinheit (114), die zum Drehen des ersten der Konnektoren (103) als Reaktion auf ein Steuersignal gekoppelt ist; und
eine Energiespeichereinheit (117), die zur Versorgung der Antriebseinheit mit Antriebsenergie gekoppelt ist.

2. Satz von Bauelementen (900) nach Anspruch 1, wobei das Körperelement (119) rohrförmig oder rohrförmig mit einem oder mehreren Zweigen ist, die durch einen Konnektor (103) abgeschlossen sind.

3. Satz von Bauelementen (900) nach Anspruch 1 oder 2, wobei mindestens einige der Endabschnitte (121) des Körperelements (119) einen runden Querschnitt aufweisen.

4. Satz von Bauelementen (900) nach einem der Ansprüche 1-3, wobei mindestens eines der Körperelemente ausgelegt ist, um gegen mindestens einen der Endabschnitte (121) zu verengen.

5. Satz von Bauelementen (900) nach einem der Ansprüche 1-4, wobei das männliche Eingriffselement und das weibliche Eingriffselement eine zugespitzte und zueinander passende Form aufweisen.

6. Satz von Bauelementen (900) nach einem der Ansprüche 1-5, umfassend mehrere Paare von einem radial sich erstreckenden männlichen Eingriffselement (503) und einem radial sich erstreckenden weiblichen Eingriffselement (504).

7. Satz von Bauelementen (900) nach Anspruch 6, wobei die mehreren Paare von einem radial sich erstreckenden männlichen Eingriffselement (503) und einem radial sich erstreckenden weiblichen Eingriffselement (504) in einem Winkel von 90 Grad relativ zueinander angeordnet sind.

8. Satz von Bauelementen (900) nach einem der Ansprüche 1-7, umfassend mehrere Paare von Magneten (401 ;402), die hinter der Anlagefläche (201), mit ihrer Polarität zueinander entgegengesetzt angeordnet, im Wesentlichen in demselben radialen Abstand zu dem mittleren Bereich (202) derart sitzen, dass magnetische Polarität mit einer Rechts- oder Linksdrehrichtung des Konnektors (103) wechselt.

9. Satz von Bauelementen (900) nach einem der Ansprüche 1-8, wobei der diagonal magnetisierte Magnet im Wesentlichen zylindrisch ist.

10. Satz von Bauelementen (900) nach Anspruch 9, wobei der diagonal magnetisierte Magnet (501, 502) in einer im Wesentlichen zylindrischen Abteilung, einer Schürze oder einer Bohrung aufgenommen ist.

11. Satz von Bauelementen (900) nach einem der Ansprüche 1-10, umfassend:
ein bzw. mehrere zweite Bauelement(e) (101;701;901..907) mit einem Gehäuse (119), das aus einer Gruppe von geraden, gebogenen, L-förmigen und T-förmigen Körpern mit einem oder mehreren Endabschnitten (121) ausgewählt ist bzw sind; wobei das erste Bauelement mit mindestens einem zweiten Verbinder (103) ausgebildet ist;
wobei der zweite Konnektor (103) umfasst:
eine Anlagefläche (201) mit einem mittleren Bereich (202);
eine Metallscheibe (406), die hinter der Anlagefläche (201) angeordnet ist; und ein Paar von einem weiblichen Eingriffselement (504), das sich von dem mittleren Bereich (202) radial erstreckt, und ein männliches Eingriffselement (503), das sich von dem mittleren Bereich (202) erstreckt; wobei eine Tiefe (D) des weiblichen Eingriffselements und eine Höhe (H) des entsprechenden männlichen Eingriffselements größer als eine Breite (Wm) des männlichen Eingriffselements oder größer als eine Breite (Wf) des weiblichen Eingriffselements ist.

12. Satz von Bauelementen (900) nach einem der Ansprüche 1-11, wobei die Antriebseinheit (114) über ein Verbindungsstück (111) mit dem Konnektor verbunden ist.

13. Satz von rohrförmigen Bauelementen (900) nach einem der Ansprüche 1-12, umfassend eine drahtlose Kommunikationsschaltung, die dazu betreibbar ist, das Steuersignal für die Antriebseinheit (114) zu erzeugen.

## Revendications

1. Ensemble d'éléments de construction (900), comprenant :
un premier élément de construction (101;701;901..907) avec un logement (119) qui est sélectionné parmi un groupe de corps à lignes droites, courbées, en forme de L et en T avec une ou plusieurs parties d'extrémité (121); dans lequel l'élément de construction est configuré avec au moins un premier connecteur (506) configuré comme une prise intégrée avec ou installée dans au moins certaines des parties d'extrémité (121) ;
dans lequel le premier connecteur (506) comprend :
une face de butée (201) avec une partie centrale (202) ;
un aimant magnétisé diagonalement (501,502) disposé en rotation derrière la face de butée (201) ou une première paire d'aimants (501,502;401,402) assis derrière la face de butée (201), avec leur polarité disposée en face l'une de l'autre ; et
une paire d'un élément d'engagement femelle (504) s'étendant radialement depuis la partie centrale (202) et d'un élément d'engagement mâle (503) s'étendant depuis la partie centrale (202) ; une profondeur (D) de l'élément d'engagement femelle et une hauteur (H) de l'élément d'engagement mâle correspondant étant supérieure à une largeur (Wm) de l'élément d'engagement mâle ou supérieure à une largeur (Wf) de l'élément d'engagement femelle ;
dans lequel l'élément d'engagement femelle (504) est configuré comme un évidement et l'élément d'engagement mâle (503) est configuré comme une saillie avec des parois latérales respectives s'étendant dans un direction radiale depuis la partie centrale (202) ; et dans lequel une paroi latérale (124) de l'évidement bute contre une paroi latérale de la saillie si bien qu'une paroi latérale plane (124) est formée d'une partie inférieure (123) de l'évidement à une partie supérieure (122) de la saillie ;
dans lequel au moins un premier élément de construction parmi les éléments de construction (101; 701) comprend au moins un premier des connecteurs (103) ; dans lequel au moins le premier des connecteurs (103) est monté rotatif dans un palier (108) fixé au premier élément de construction ;
une unité d'entraînement (114) couplée pour faire tourner le premier des connecteurs (103) en réponse à un signal de commande; et
une unité de stockage d'énergie (117) couplée pour fournir une puissance de fonctionnement à l'unité d'entraînement.

2. Ensemble d'éléments de construction (900) selon la revendication 1, dans lequel l'élément de corps (119) est tubulaire ou tubulaire avec une ou plusieurs branches terminées par un connecteur (103).

3. Ensemble d'éléments de construction (900) selon la revendication 1 ou 2, dans lequel au moins certaines des parties d'extrémité (121) dudit élément de corps (119) ont une section transversale ronde.

4. Ensemble d'éléments de construction (900) selon l'une quelconque des revendications 1 à 3, dans lequel au moins l'un des éléments de corps est configuré pour s'effiler vers au moins l'une des parties d'extrémité (121).

5. Ensemble d'éléments de construction (900) selon l'une quelconque des revendications 1 à 4, dans lequel l'élément d'engagement mâle et l'élément d'engagement mâle présentent une forme effilée et correspondante.

6. Ensemble d'éléments de construction (900) selon l'une quelconque des revendications 1 à 5, comprenant multiples paires d'un élément d'engagement mâle s'étendant radialement (503) et d'un élément d'engagement femelle s'étendant radialement (504).

7. Ensemble d'éléments de construction (900) selon la revendication 6, dans lequel les multiples paires d'un élément d'engagement mâle s'étendant radialement (503) et d'un élément d'engagement femelle s'étendant radialement (504) sont disposées à 90 degrés les unes par rapport aux autres.

8. Ensemble d'éléments de construction (900) selon l'une quelconque des revendications 1 à 7, comprenant multiples paires d'aimants (401; 402) assis derrière la face de butée (201), avec leur polarité disposée en face l'une de l'autre, essentiellement à la même distance radiale à la partie centrale (202) si bien que la polarité magnétique alterne avec une rotation dans le sens horaire ou antihoraire du connecteur (103).

9. Ensemble d'éléments de construction (900) selon l'une quelconque des revendications 1 à 8, dans lequel l'aimant magnétisé diagonalement est essentiellement cylindrique.

10. Ensemble d'éléments de construction (900) selon la revendication 9, dans lequel l'aimant magnétisé diagonalement (501, 502) est logé dans un compartiment essentiellement cylindrique, une jupe ou un alésage.

11. Ensemble d'éléments de construction (900) selon l'une quelconque des revendications 1 à 10, comprenant :
un ou plusieurs deuxièmes éléments de construction (101; 701; 901..907) avec un logement (119) qui est sélectionné dans un groupe de corps droits, courbés, en forme de L et en T avec une ou plusieurs parties d'extrémités (121); dans lequel les éléments de construction sont configurés avec au moins un deuxième connecteur (103) ;
dans lequel le deuxième connecteur (103) comprend :
une face de butée (201) avec une partie centrale (202) ;
un disque métallique (406) disposé derrière la face de butée (201) ; et
une paire d'un élément d'engagement femelle (504) s'étendant radialement depuis la partie centrale (202) et d'un élément d'engagement mâle (503) s'étendant depuis la partie centrale (202) ; une profondeur (D) de l'élément d'engagement femelle et une hauteur (H) de l'élément d'engagement mâle correspondant étant supérieure à une largeur (Wm) de l'élément d'engagement mâle ou supérieure à une largeur (Wf) de l'élément d'engagement femelle.

12. Ensemble d'éléments de construction (900) selon l'une quelconque des revendications 1 à 11, dans lequel l'unité d'entraînement (114) est couplée au connecteur via un couplage (111).

13. Ensemble d'éléments de construction tubulaires (900) selon l'une quelconque des revendications 1 à 12, comprenant un circuit de communication sans fil fonctionnant pour générer le signal de commande vers l'unité d'entraînement (114).
